# EUROPEAN PATENT APPLICATION

(11) **EP 3 779 843 A1**
(43) Date of publication of application: **17.02.2021**
(21) Application number: 19856696.0
(22) Date of filing: 18.07.2019
(51) Int. Cl.: G06Q 30/06, G06Q 30/02

(54) **SERVICE RECOMMENDATION METHOD AND APPARATUS, AND ELECTRONIC DEVICE AND READABLE STORAGE MEDIUM**

(30) Priority: 04.09.2018 CN 201811026589
(71) Applicant: Advanced New Technologies Co., Ltd., George Town, Grand Cayman KY1-9008 (KY)
(72) Inventor: XIN, Zhi, Hangzhou, Zhejiang 310000 (CN); YANG, Yipeng, Hangzhou, Zhejiang 310000 (CN); LI, Chao, Hangzhou, Zhejiang 310000 (CN)
(74) Representative: Goddar, Heinz J.
(86) International application number: PCT/CN2019/096491
(87) International publication number: WO 2020/048240

(57) **Abstract**

Embodiments of the present specification provide a service recommendation method. In a predetermined scenario, a recommendation document for the present recommendation is selected based on attribute information of a user satisfying an activation condition of a predetermined payment service and a predetermined rule that is associated with the recommendation document in advance. Further, a recommendation interface is displayed to the user based on the recommendation document. It improves the success rate of recommendation without significantly improving the interruption rate.

## Description

### TECHNICAL FIELD

Embodiments of the present specification relate to the field of data processing technologies, and in particular, to service recommendation methods, apparatuses, electronic devices, and computer-readable storage media.

### BACKGROUND

The development of Internet technologies greatly facilitates service promotion. It is necessary to recommend new payment services to users so as to expand user coverage. Therefore, a recommendation method that can effectively improve the success rate is needed.

### SUMMARY

Embodiments of the present specification provide service recommendation methods, apparatuses, electronic devices, and computer-readable storage media.

According to a first aspect, embodiments of the present specification provide a service recommendation method, including: receiving a recommendation request sent by a client device, where the recommendation request is sent when the client device detects that a user enters a predetermined scenario and determines that the user satisfies an activation condition of a predetermined payment service; obtaining the user's attribute information based on the recommendation request; determining a recommendation document for the present recommendation by matching the attribute information with a predetermined rule that is associated with the recommendation document in advance; and sending the recommendation document to the client device so that the client device displays a recommendation interface to the user based on the recommendation document, where the recommendation interface is used to recommend the predetermined payment service to the user.

According to a second aspect, embodiments of the present specification provide a service recommendation method, including: determining whether a user satisfies an activation condition of a predetermined payment service when detecting that the user enters a predetermined scenario; sending a recommendation request to a server when the activation condition is satisfied, so that the server obtains the user's attribute information based on the recommendation request, and determines a recommendation document for the present recommendation by matching the attribute information with a predetermined rule that is associated with the recommendation document in advance; and receiving the recommendation document sent by the server, and displaying a recommendation interface to the user based on the recommendation document, where the recommendation interface is used to recommend the predetermined payment service to the user.

According to a third aspect, embodiments of the present specification provide a service recommendation method, including: determining whether a user satisfies an activation condition of a predetermined payment service when detecting that the user enters a predetermined scenario, where the predetermined scenario is a password-based payment scenario, a password addition scenario, or a password retrieval scenario; and displaying a recommendation interface to the user when the activation condition is satisfied, where the recommendation interface is used to recommend the predetermined payment service to the user.

According to a fourth aspect, embodiments of the present specification provide a service recommendation apparatus. The service recommendation apparatus is applied to a server and includes a receiving module, an acquisition module, a determining module, and a document sending module. The receiving module is configured to receive a recommendation request sent by a client device, where the recommendation request is sent when the client device detects that a user enters a predetermined scenario and determines that the user satisfies an activation condition of a predetermined payment service. The acquisition module is configured to obtain the user's attribute information based on the recommendation request. The determining module is configured to determine a recommendation document for the present recommendation by matching the attribute information with a predetermined rule that is associated with the recommendation document in advance. The document sending module is configured to send the recommendation document to the client device so that the client device displays a recommendation interface to the user based on the recommendation document, where the recommendation interface is used to recommend the predetermined payment service to the user.

According to a fifth aspect, embodiments of the present specification provide a service recommendation apparatus. The service recommendation apparatus is applied to a client device and includes a determining module, a request sending module, and a displaying module. The determining module is configured to determine whether a user satisfies an activation condition of a predetermined payment service when detecting that the user enters a predetermined scenario. The request sending module is configured to send a recommendation request to a server when the activation condition is satisfied, so that the server obtains the user's attribute information based on the recommendation request, and determines a recommendation document for the present recommendation by matching the attribute information with a predetermined rule that is associated with the recommendation document in advance. The displaying module is configured to receive the recommendation document sent by the server, and display a recommendation interface to the user based on the recommendation document, where the recommendation interface is used to recommend the predetermined payment service to the user.

According to a sixth aspect, embodiments of the present specification provide a service recommendation apparatus, including: a detection module, configured to determine whether a user satisfies an activation condition of a predetermined payment service when detecting that the user enters a predetermined scenario, where the predetermined scenario is a password-based payment scenario, a password addition scenario, or a password retrieval scenario; and a recommendation module, configured to display a recommendation interface to the user when the activation condition is satisfied, where the recommendation interface is used to recommend the predetermined payment service to the user.

According to a seventh aspect, embodiments of the present specification provide an electronic device, including a memory, a processor, and a computer program that is stored on the memory and can run on the processor. When the processor executes the program, the steps in the service recommendation method according to the first aspect, the second aspect, or the third aspect are implemented.

According to an eighth aspect, embodiments of the present specification provide a computer-readable storage medium storing a computer program. When the program is executed by a processor, the steps in the service recommendation method according to the first aspect, the second aspect, or the third aspect are implemented.

The beneficial effects of some embodiments of the present specification are as follows:

According to the service recommendation methods provided in some embodiments of the present specification, the client device sends the recommendation request to the server when detecting that the user enters the predetermined scenario and determining that the user satisfies the activation condition of the predetermined payment service. Then the server obtains the user's attribute information based on the recommendation request, determines the recommendation document for the present recommendation by matching the attribute information with the predetermined rule that is associated with the recommendation document in advance, and sends the recommendation document to the client device. The client device displays the recommendation interface to the user based on the recommendation document. In an appropriate scenario, the recommendation document is selected for the user satisfying the activation condition based on the user's attribute information and the predetermined rule. It improves the success rate of recommendation without significantly improving the interruption rate.

### BRIEF DESCRIPTION OF DRAWINGS

FIG. 1 is a schematic diagram illustrating an application scenario of embodiments of the present specification;
FIG. 2 is a flowchart illustrating a service recommendation method, according to a first aspect of embodiments of the present specification;
FIG. 3 is a flowchart illustrating a service recommendation method, according to a second aspect of embodiments of the present specification;
FIG. 4 is a flowchart illustrating a service recommendation method, according to a third aspect of embodiments of the present specification;
FIG. 5 is a schematic structural diagram illustrating a service recommendation apparatus, according to a fourth aspect of embodiments of the present specification;
FIG. 6 is a schematic structural diagram illustrating a service recommendation apparatus, according to a fifth aspect of embodiments of the present specification;
FIG. 7 is a schematic structural diagram illustrating a service recommendation apparatus, according to a sixth aspect of embodiments of the present specification; and
FIG. 8 is a schematic structural diagram illustrating an electronic device, according to a seventh aspect of embodiments of the present specification.

### DESCRIPTION OF EMBODIMENTS

To better understand the previous technical solutions, the following describes the technical solutions in some embodiments of the present specification in detail by reference to the accompanying drawings and specific embodiments. It should be understood that some embodiments of the present specification and specific features in some embodiments are detailed description of the technical solutions in some embodiments of the present specification, rather than a limitation on the technical solutions of the present specification, and some embodiments of the present specification and the technical features in some embodiments can be combined with each other if there is no conflict.

In some embodiments of the present specification, the Internet Finance Authentication Alliance (IFAA) protocol is a security verification protocol, which is mainly used to support various services such as fingerprint-based payment, face-based payment, and SE certificates. A password-based payment scenario is a scenario where a user was just verified for payment using a password. A password retrieval scenario is a scenario where a user forgot the payment password and retrieve the password by performing some specified operations such as answering questions. A password addition scenario is a scenario where a user without a payment password sets a payment password as requested by a system.

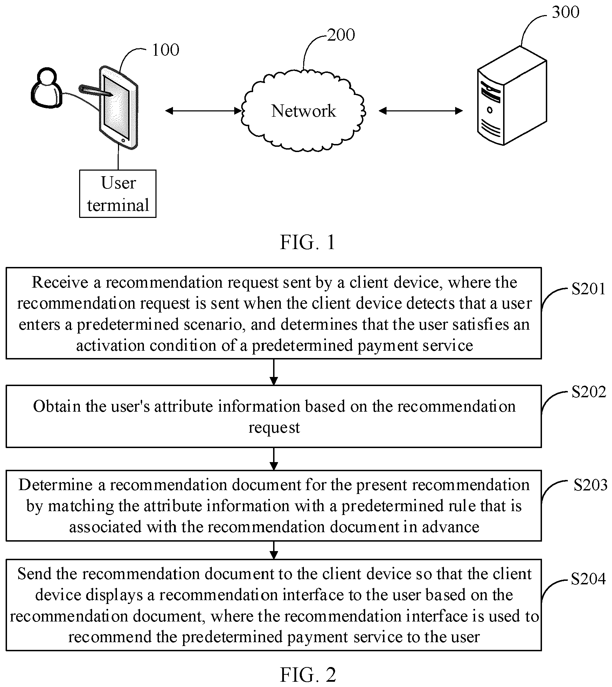

FIG. 1 is a schematic diagram illustrating an operating environment of embodiments of the present specification. As shown in FIG. 1, one or more user terminals 100 (only one is shown in FIG. 1) can be connected to one or more servers 300 (only one is shown in FIG. 1) through a network 200 for data communication or interaction. The user terminal 100 can be a smart device having a network function, such as a personal computer (PC), a notebook computer, a tablet, a smart phone, an e-reader, an in-vehicle device, a web TV, and a wearable device.

In some embodiments of the present specification, a client device is installed on the user terminal 100. The client device can be a third-party application software or a browser, corresponding to a server side, and providing users with services, such as a payment service used to pay for a transaction.

According to a first aspect, embodiments of the present specification provide a service recommendation method. In some embodiments, the service recommendation method is executed by a server. As shown in FIG. 2, the method includes steps S201 to S204.

Step S201: Receive a recommendation request sent by a client device, where the recommendation request is sent when the client device detects that a user enters a predetermined scenario and determines that the user satisfies an activation condition of a predetermined payment service.

In some embodiments of the present specification, the predetermined payment service can be a service of payment using biometric information, such as a fingerprint-based payment service and a face-based payment service. Compared with a password, fingerprint verification and face recognition deliver higher success rates. Therefore, an improvement in the proportion of fingerprint-based payment or face-based payment used by users helps improve the overall payment success rate. In this case, service recommendation for the user is needed to expand the coverage of fingerprint-based payment users. Certainly, in other embodiments of the present specification, the predetermined payment service can be another payment service that needs to be recommended to the user.

To increase the success rate of recommendation, the client device selects users and corresponding scenarios to be recommended to the users. The client device sends the recommendation request to the server when detecting that the user enters the predetermined scenario and determining that the user satisfies the activation condition of the predetermined payment service.

In some embodiments of the present specification, the predetermined scenario can be set based on actual applications. In these scenarios, providing an alternative payment method for the user can better cater to the user's mind. Specifically, the predetermined scenario can be any scenario in a specified scenario set. In some embodiments of the present specification, the specified scenario set can include, but is not limited to, a password-based payment scenario, a password addition scenario, and a password retrieval scenario. It can be understood that it is a good time to recommend the service to the user when the user just completed password-based payment. The user needs to remember a password for the password-based payment, and entering the password takes a relatively long time. Recommending a time-efficient and labor-saving option at this moment can better cater to the user's mind. Similarly, in a password addition or retrieval scenario, the user just experienced the trouble of additional operations caused by password forgetting. It is a good time to provide a solution that the user does not need to remember the password. Therefore, it is easier for the user to accept the new payment service recommended in an appropriate scenario, which helps improve the success rate of recommendation.

When the predetermined payment service is a service of payment using biometric information, the activation condition can be set based on actual payment service needs. In an optional embodiment, in step S201, the activation condition includes one or more of the following three conditions: a user terminal used by the user supports a predetermined security protocol; the user's biometric information is pre-entered to the user terminal used by the user; and the predetermined payment service of the user is in an inactive state.

Specifically, in some embodiments of the present specification, a process in which the client device determines whether the user satisfies the activation condition of the predetermined payment service can include the following: the client device determines whether the predetermined payment service of the user is in the active state; if yes, the present recommendation ends, or if no, the client device determines whether the user terminal used by the user supports the predetermined security protocol; if no, the present recommendation ends, or if yes, the client device determines whether the user's biometric information is pre-entered to the user terminal used by the user; if no, the present recommendation ends, or if yes, the client device determines that the user satisfies the activation condition of the predetermined payment service. It is worthwhile to note that the steps of determining the activation state, the security protocol, and biometric information entering can be performed in another sequence. For example, the step of determining the security protocol can be performed first, and then the steps of determining the activation state and biometric information entering can be performed.

Specifically, when the predetermined payment service is the fingerprint-based payment service or the face-based payment service, the predetermined security protocol can be the IFAA protocol or a similar security protocol. The IFAA protocol or similar security protocol is the basic condition for supporting fingerprint-based payment or face-based payment. For example, when the user terminal is a smart phone, the isSupported interface can be invoked to determine whether the smart phone supports the IFAA protocol based on a status bit embedded in the framework by the phone manufacturer.

Specifically, the biometric information such as fingerprint or face information pre-entered by the user to the user terminal is stored in a specific location on the user terminal. The user can use an interface provided by the system to determine whether the user's biometric information is stored in the specific location on the user terminal. Certainly, the stored biometric information needs to correspond to the predetermined payment service. For example, the biometric information is fingerprint information when the predetermined payment service is the fingerprint-based payment service, and face information when the predetermined payment service is the face-based payment service.

Step S202: Obtain the user's attribute information based on the recommendation request.

It can be understood that the recommendation request includes the user's identity information such as the user's account information or other identity information, so that the server can identify the user's attribute information based on the user's identity information. In some embodiments of the present specification, the user's attribute information can include, but is not limited to, the user terminal used by the user, whether there is an activation record, and the frequency of use. For example, the user's attribute information can further include the user's age and city.

Step S203: Determine a recommendation document for the present recommendation by matching the attribute information with a predetermined rule that is associated with the recommendation document in advance.

In some embodiments of the present specification, the predetermined rule can include one rule or a plurality of rules preconfigured with a priority order, which can be set based on actual needs. Each rule is associated with a preconfigured recommendation document. It is worthwhile to note that the recommendation document can be specifically configured based on different rules, which helps display a suitable recommendation document to the user based on the user's attribute information. As such, the displayed recommendation document can better cater to the user's mind, thereby improving the success rate of recommendation.

When the predetermined rules include one rule, the user's attribute information is matched with the rule. When the matching succeeds, a recommendation document associated with the rule is used as the recommendation document for the present recommendation. When the matching fails, subsequent recommendation is not performed for the user. In this case, the server can feed back information to the client device to indicate the end of the present recommendation, so that the client device ends the present recommendation when receiving the information. Or when the matching fails, it indicates that the user does not have a personalized attribute. In this case, a predetermined default document is used as the recommendation document for the present recommendation.

Specifically, the user's attribute information and the predetermined rule can be set as requested, and the attribute information corresponds to a specific predetermined rule. The following four rules are described in some embodiments of the present specification. Certainly, in a specific implementation process, it is not limited to the following four rules.

A first type of predetermined rule can include a scenario rule. The scenario rule is a rule set based on a specific scenario. In this case, attribute information can include information of a scenario in which the user is currently in, correspondingly, the step of determining a recommendation document for the present recommendation by matching the attribute information with a predetermined rule that is associated with the recommendation document in advance includes matching the attribute information with the scenario rule. The matching the attribute information with the scenario rule specifically includes: determining whether information about a scenario that the user is currently in is related to a specified scenario, and if yes, determining that the attribute information successfully matches the scenario rule, and using a recommendation document that is associated with the scenario rule in advance as the recommendation document for the present recommendation, or if no, determining that the attribute information fails to match the scenario rule.

In a specific application scenario, the specified scenario corresponding to the scenario rule can include a password addition scenario and a password retrieval scenario. When the predetermined payment service is a service of payment using biometric information, it is particularly suitable for forgetful users because fingerprints or face images will not be forgotten. The configured recommendation document corresponding to the scenario rule can focus on "worry free". For example, the recommendation document corresponding to the scenario rule can be configured to the following for the fingerprint-based payment service: "No need to worry about forgetting the password, the password is your fingerprint."

A second type of predetermined rule can include an activation record rule. The activation record rule is set for a user who has changed a user terminal. The user who has changed a user terminal is a user who activates the predetermined payment service on a user terminal different from the currently used user terminal. In this case, the attribute information can include identification information used to indicate whether the user has a historical activation record of the predetermined payment service. Correspondingly, in this case, the step of determining a recommendation document for the present recommendation by matching the attribute information with a predetermined rule that is associated with the recommendation document in advance includes matching the attribute information with the activation record rule. The matching the attribute information with the activation record rule specifically includes: determining whether the user has a historical activation record of the predetermined payment service based on the identification information, and if yes, determining that the attribute information successfully matches the activation record rule, and using a recommendation document that is associated with the activation record rule in advance as the recommendation document for the present recommendation.

For example, in a specific application scenario, the server can search whether the user has a historical activation record of the predetermined payment service based on the user's identity information in the recommendation request, and represent a search result by setting identification information. When the search result is that the user has a historical activation record of the predetermined payment service, it indicates that the user has changed a user terminal, and it is determined that the attribute information successfully matches the activation record rule. When the search result is that the user does not have a historical activation record of the predetermined payment service, it is determined that the attribute information fails to match the activation record rule.

The user who has changed a user terminal is familiar with use of the predetermined payment service. The user only needs to be reminded to activate the service. Therefore, the recommendation document corresponding to the activation record rule can be configured to remind the user to activate the predetermined payment service. For example, the corresponding recommendation document for the fingerprint-based payment service can be configured to the following: "Activate fingerprint verification to make payment safer and more convenient."

A third type of predetermined rule can include a payment frequency rule used to select a user who makes payment with a relatively high frequency. In this case, the attribute information can include the frequency with which the user makes payment using the client device. Specifically, the frequency with which the user makes payment using the client device can be the frequency with which the user makes payment using the client device in a specified time period before the current time, for example, the payment frequency in the previous month, the previous quarter, or the previous year. Correspondingly, in this case, the step of determining a recommendation document for the present recommendation by matching the attribute information with a predetermined rule that is associated with the recommendation document in advance includes matching the attribute information with the payment frequency rule. The matching the attribute information with the payment frequency rule specifically includes: determining whether the frequency with which the user makes payment using the client device exceeds a predetermined threshold, and if yes, determining that the attribute information successfully matches the payment frequency rule, and using a recommendation document that is associated with the payment frequency rule in advance as the recommendation document for the present recommendation, or if no, determining that the attribute information fails to match the payment frequency rule.

The predetermined threshold can be set based on distribution of each user's payment frequency in actual applications. A user who makes payment with a high frequency can be selected based on the payment frequency rule. When the predetermined payment service is a service of payment using biometric information, it is particularly suitable for users who fight for promotional products with high frequencies, because the biometric information such as a fingerprint or face can be verified faster than a password. Therefore, the configured recommendation document corresponding to the payment frequency rule can focus on "fast verification". For example, the recommendation document corresponding to the payment frequency rule can be configured to the following for the fingerprint-based payment service: "Activate fingerprint verification to make payment faster."

A fourth type of predetermined rule can include a user attribute rule used to select a user type. In this case, the attribute information can include the model of the user terminal used by the user. Correspondingly, in this case, the step of determining a recommendation document for the present recommendation by matching the attribute information with a predetermined rule that is associated with the recommendation document in advance includes matching the attribute information with the user attribute rule. The matching the attribute information with the user attribute rule specifically includes: determining whether the user is a predetermined user based on the model of the user terminal used by the user, and if yes, determining that the attribute information successfully matches the user attribute rule, and using a recommendation document that is associated with the user attribute rule in advance as the recommendation document for the present recommendation, or if no, determining that the attribute information fails to match the user attribute rule.

Specifically, the server can determine whether the user is the predetermined user based on the model of the user terminal used by the user in combination with other attributes of the user, such as the user's age, city, and ability to pay. The user's ability to pay can be the user's transaction amount in a specified time period before the current time. For example, when other attributes of the user include the user's age, city, and ability to pay, the server can determine that the user is the predetermined user when the model of the user terminal used by the user belongs to a predetermined model set, the user's age is in a predetermined age range, the user's city is a first-tier city, and the user's ability to pay exceeds a predetermined amount. The predetermined age range and the predetermined amount can be set based on actual conditions. Since prices vary with models and brands of user terminals, the predetermined model set can be built by obtaining models with prices greater than a predetermined price threshold from user terminals of each brand.

Alternatively, in other embodiments of the present specification, the server can determine whether the user is the predetermined user by determining whether the model of the user terminal used by the user belongs to the predetermined model set. If the model belongs to the predetermined model set, the server can determine that the user is the predetermined user. If the model does not belong to the predetermined model set, the server can determine that the user is not the predetermined user.

In a specific application scenario, a service can be recommended to a user who matches the user attribute rule from the perspective that the service is more commonly used by users of the type. Therefore, the configured recommendation document corresponding to the user attribute rule can focus on "conformity". For example, for fingerprint-based payment service, and when the user uses a smart phone, the recommendation document corresponding to the user attribute rule can be configured to the following: "60% of XX mobile phone users are paying with fingerprints. Passwords are outdated", where "XX" can be a mobile phone brand.

In addition, when the predetermined rule includes a plurality of rules preconfigured with a priority order, each rule is associated with a corresponding recommendation document. In this case, the step of determining a recommendation document for the present recommendation by matching the attribute information with a predetermined rule that is associated with the recommendation document in advance includes: sequentially matching the attribute information with the plurality of rules based on the priority order; and when the attribute information successfully matches any one of the rules, using a recommendation document corresponding to the successfully matched rule as the recommendation document for the present recommendation. It is worthwhile to note that the priority order of the plurality of rules included in the predetermined rule can be set and adjusted based on actual test results of success rates of recommendation under the rules.

For example, assume that the predetermined rules include rule A, rule B, and rule C. Rule A is associated with predetermined recommendation document P1. Rule B is associated with predetermined recommendation document P2. Rule C is associated with predetermined recommendation document P3. If the preconfigured priority order is rule A > rule B > rule C, the user's attribute information is first matched with rule A. When the matching succeeds, recommendation document P1 is used as the recommendation document for the present recommendation, and the matching ends. When the matching fails, the user's attribute information is matched with rule B. When the matching succeeds, recommendation document P2 is used as the recommendation document for the present recommendation, and the matching ends. When the matching fails, the user's attribute information is matched with rule C. When the matching succeeds, recommendation document P3 is used as the recommendation document for the present recommendation, and the matching ends. When the matching fails, that is, the user's attribute information matches no predetermined rule, subsequent recommendation is not performed for the user. In this case, the server can feed back information to the client device to indicate the end of recommendation, so that the client device ends the present recommendation when receiving the information. Or, when the user's attribute information matches no predetermined rule, the predetermined default document can be used as the recommendation document for the present recommendation.

In some embodiments of the present specification, the predetermined rule can include two or more of the previously described scenario rule, activation record rule, payment frequency rule, and user attribute rule. Certainly, in other embodiments of the present specification, in addition to these rules, the predetermined rules can further include other rules, which can be specifically set as requested

For example, when the predetermined rules include any two of the previously described scenario rule, activation record rule, payment frequency rule, and user attribute rule, the two rules correspond to a priority order. The attribute information is first matched with the rule with a higher priority. When the matching succeeds, a recommendation document corresponding to the rule is used as the recommendation document for the present recommendation, and the matching ends. When the matching fails, the attribute information is matched with the other rule with a lower priority.

When the predetermined rules include any three of the previously described scenario rule, activation record rule, payment frequency rule, and user attribute rule, the three rules correspond to a priority order. In this case, the attribute information is sequentially matched with the three rules in descending order of priority.

When the predetermined rules include the previously described scenario rule, activation record rule, payment frequency rule, and user attribute rule, these four rules correspond to a priority order. In this case, the attribute information is sequentially matched with the four rules in descending order of priority. In an optional embodiment, based on the success rates of recommendation in the actual test results, the priority order of the previously described scenario rule, activation record rule, payment frequency rule, and user attribute rule can be: scenario rule > activation record rule > payment frequency rule > user attribute rule. In this case, the attribute information is first matched with the scenario rule. When the matching succeeds, the recommendation document corresponding to the scenario rule is used as the recommendation document for the present recommendation, and the matching ends. When the matching fails, the attribute information is matched with the activation record rule. When the matching succeeds, the recommendation document corresponding to the activation record rule is used as the recommendation document for the present recommendation, and the matching ends. When the matching fails, the attribute information is matched with the payment frequency rule. When the matching succeeds, the recommendation document corresponding to the payment frequency rule is used as the recommendation document for the present recommendation, and the matching ends. When the matching fails, the attribute information is matched with the user attribute rule. When the matching succeeds, the recommendation document corresponding to the user attribute rule is used as the recommendation document for the present recommendation, and the matching ends. When the matching fails, the present recommendation ends or the predetermined default document is used as the recommendation document for the present recommendation.

Step S204: Send the recommendation document to the client device so that the client device displays a recommendation interface to the user based on the recommendation document, where the recommendation interface is used to recommend the predetermined payment service to the user.

After determining the recommendation document for the present recommendation in step S203, the server sends the recommendation document to the client device. The client device displays the recommendation interface based on the recommendation document. The recommendation document and a button for activating the predetermined payment service can be displayed in the recommendation interface. The user can browse the recommendation document in the recommendation interface. If the user wants to activate the predetermined payment service, the user can trigger the activation button to activate the predetermined payment service. In this case, the recommendation succeeds. If the user does not want to activate the predetermined payment service, the user can exit the recommendation interface or directly close the client device. In this case, the recommendation fails.

In some embodiments of the present specification, to further improve the recommendation strategy and the success rate of service recommendation, the method further includes a strategy adjustment step. The strategy adjustment step specifically includes: receiving behavioral data of the user based on the recommendation interface from the client device; and adjusting the predetermined rule based on the behavior data.

Specifically, the behavioral data of the user based on the recommendation interface can include whether the user clicks the activation button displayed in the recommendation interface, whether the user exits the recommendation interface, whether the user directly exits the client device, duration of stay of the user in the recommendation interface, and other data.

A specific strategy for the server to adjust the predetermined rule based on the behavioral data can be set based on actual applications. For example, when the predetermined rules includes a plurality of rules, and recommendation is performed for users satisfying one of the rules, a rule is not applicable if the success rate is lower than a predetermined first critical value, or the proportion of users who directly exit the client device after the recommendation interface is displayed is higher than a predetermined second critical value. In this case, the rule can be deleted or modified. For another example, the predetermined rule includes the scenario rule, the activation record rule, the payment frequency rule, and the user attribute rule, and the priority order is scenario rule > activation record rule > payment frequency rule > user attribute rule. If the acquired behavioral data fed back by a predetermined quantity of users indicates that the success rate of recommendation for users satisfying the payment frequency rule is higher than the success rate of recommendation for users satisfying the activation record rule, the priority order of the activation record rule and the payment frequency rule can be adjusted. That is, the priority order of predetermined rules can be adjusted to scenario rule > payment frequency rule > activation record rule > user attribute rule.

For still another example, when the duration of stay of the user in the recommendation interface exceeds a predetermined stay duration threshold, it indicates that the user may intend to activate the recommended predetermined payment service but fail to activate the service because of some problems. In this case, the server can further send a query instruction to the client device corresponding to the user, so that a query window pops up in the recommendation interface on the client device to query whether the user encounters a problem. The user can enter the encountered problem in the query window, and the client device feeds back the problem to the server. After receiving the problem feedback, the server can help the potential user to solve the problem and activate the predetermined payment service.

According to the service recommendation method provided in some embodiments of the present specification, the recommendation document is selected for the user satisfying the activation condition based on the user's attribute information and the predetermined rule in an appropriate scenario. It improves the success rate of recommendation without significantly improving the interruption rate.

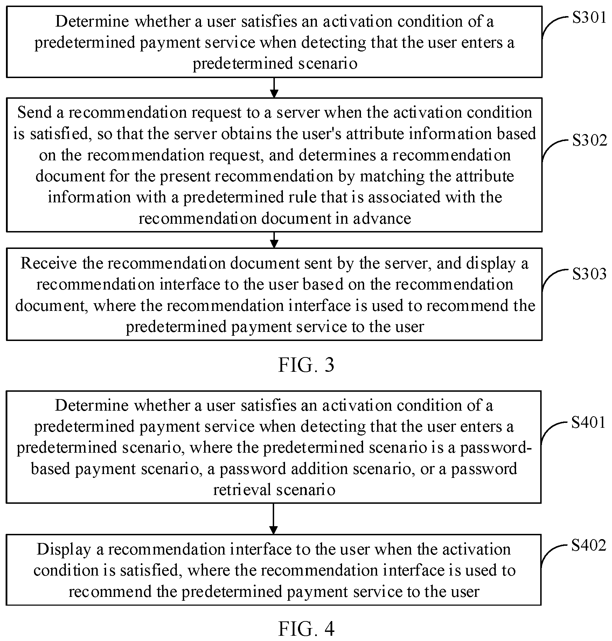

According to a second aspect, embodiments of the present specification provide a service recommendation method. In some embodiments, the service recommendation method is executed by a client device. As shown in FIG. 3, the method includes steps S301 to S303.

Step S301: Determine whether a user satisfies an activation condition of a predetermined payment service when detecting that the user enters a predetermined scenario.

In some embodiments of the present specification, the predetermined payment service can be a service of payment using biometric information, such as a fingerprint-based payment service and a face-based payment service. Compared with a password, fingerprint verification and face recognition deliver higher success rates. Therefore, an improvement in the proportion of fingerprint-based payment or face-based payment used by users helps improve the overall payment success rate. In this case, service recommendation for the user is needed to expand the coverage of fingerprint-based payment users. Certainly, in other embodiments of the present specification, the predetermined payment service can be another payment service that needs to be recommended to the user.

To increase the success rate of recommendation, the client device selects users and corresponding scenarios to be recommended to the users. The client device sends a recommendation request to a server when detecting that the user enters the predetermined scenario and determining that the user satisfies the activation condition of the predetermined payment service.

In some embodiments of the present specification, the predetermined scenario can be set based on actual applications. In these scenarios, providing an alternative payment method for the user can better cater to the user's mind. Specifically, the predetermined scenario can be any scenario in a specified scenario set. In some embodiments of the present specification, the specified scenario set can include, but is not limited to, a password-based payment scenario, a password addition scenario, and a password retrieval scenario.

Related operations of the user need to be monitored to detect whether the user enters the predetermined scenario. It can be understood that, in the password-based payment scenario, the related operation of the user is a password-based payment operation. To be specific, the user enters a password and completes a payment operation after the password is verified. In the password addition scenario, the related operation of the user is a password addition operation. To be specific, the user adds a password as requested and instructed by the system. In the password retrieval scenario, the related operation of the user is a password retrieval operation. To be specific, the user clicks the "Forget Password" button and retrieves the password as instructed by the system.

Specifically, in an optional embodiment, the step of detecting whether the user enters the password-based payment scenario includes: when detecting that the user triggers a password-based payment operation, determining whether the password-based payment operation is completed, and if yes, determining that the user enters the password-based payment scenario.

It is worthwhile to note that a specific process of the password-based payment operation can include the following: the client device obtains the payment password entered by the user and sends the payment password to the server for verification, and the current payment transaction is completed when the verification succeeds. When the client device receives a verification success instruction from the server, the payment is completed, that is, the password-based payment operation is completed.

In an optional embodiment, the step of detecting whether the user enters the password addition scenario includes: when detecting that the user triggers a password addition operation, determining whether the password addition operation is completed, and if yes, determining that the user enters the password addition scenario.

It is worthwhile to note that the system sends an instruction to a user without a payment password to require the user to add a payment password. The user can trigger the password addition operation to set the payment password as instructed by the system. The password addition operation is completed when the payment password is set successfully.

In an optional embodiment, the step of detecting whether the user enters the password retrieval scenario includes: when detecting that the user triggers a password retrieval operation, determining whether the password retrieval operation is completed, and if yes, determining that the user enters the password retrieval scenario.

It can be understood that it is a good time to recommend the service to the user when the user just completed password-based payment. The user needs to remember a password for the password-based payment, and entering the password takes a relatively long time. Recommending a time-efficient and labor-saving option at this moment can better cater to the user's mind. Similarly, in a password addition or retrieval scenario, the user just experienced the trouble of additional operations caused by password forgetting. It is a good time to provide a solution that the user does not need to remember the password. Therefore, it is easier for the user to accept the new payment service recommended in an appropriate scenario, which helps improve the success rate of recommendation.

When the predetermined payment service is a service of payment using biometric information, the activation condition can be set based on actual payment service needs. In an optional embodiment, in step S301, the activation condition includes one or more of the following three conditions: a user terminal used by the user supports a predetermined security protocol; the user's biometric information is pre-entered to the user terminal used by the user; and the predetermined payment service of the user is in an inactive state.

Specifically, in some embodiments of the present specification, a process in which the client device determines whether the user satisfies the activation condition of the predetermined payment service can include the following: the client device determines whether the predetermined payment service of the user is in the active state; if yes, the present recommendation ends, or if no, the client device determines whether the user terminal used by the user supports the predetermined security protocol; if no, the present recommendation ends, or if yes, the client device determines whether the user's biometric information is pre-entered to the user terminal used by the user; if no, the present recommendation ends, or if yes, the client device determines that the user satisfies the activation condition of the predetermined payment service. It is worthwhile to note that the steps of determining the activation state, the security protocol, and biometric information entering can be performed in another sequence. For example, the step of determining the security protocol can be performed first, and then the steps of determining the activation state and biometric information entering can be performed.

Specifically, when the predetermined payment service is the fingerprint-based payment service or the face-based payment service, the predetermined security protocol can be the IFAA protocol or a similar security protocol. The IFAA protocol or similar security protocol is the basic condition for supporting fingerprint-based payment or face-based payment. For example, when the user terminal is a smart phone, the isSupported interface can be invoked to determine whether the smart phone supports the IFAA protocol based on a status bit embedded in the framework by the phone manufacturer.

Specifically, the biometric information such as fingerprint or face information pre-entered by the user to the user terminal is stored in a specific location on the user terminal. The user can use an interface provided by the system to determine whether the user's biometric information is stored in the specific location on the user terminal. Certainly, the stored biometric information needs to correspond to the predetermined payment service. For example, the biometric information is fingerprint information when the predetermined payment service is the fingerprint-based payment service, and face information when the predetermined payment service is the face-based payment service.

Step S302: Send a recommendation request to a server when the activation condition is satisfied, so that the server obtains the user's attribute information based on the recommendation request, and determines a recommendation document for the present recommendation by matching the attribute information with a predetermined rule that is associated with the recommendation document in advance.

It can be understood that the recommendation request includes the user's identity information such as the user's account information or other identity information, so that the server can identify the user's attribute information based on the user's identity information. In some embodiments of the present specification, the user's attribute information can include, but is not limited to, the user terminal used by the user, whether there is an activation record, and the frequency of use. For example, the user's attribute information can further include the user's age and city.

Specifically, for the implementation of determining the recommendation document for the present recommendation by matching the attribute information with the predetermined rule that is associated with the recommendation document in advance, reference can be made to the specific implementation of step S203 in the service recommendation method according to the first aspect.

Step S303: Receive the recommendation document sent by the server, and display a recommendation interface to the user based on the recommendation document, where the recommendation interface is used to recommend the predetermined payment service to the user.

The recommendation document and a button for activating the predetermined payment service can be displayed in the recommendation interface. The user can browse the recommendation document in the recommendation interface. If the user wants to activate the predetermined payment service, the user can trigger the activation button to activate the predetermined payment service. In this case, the recommendation succeeds. If the user does not want to activate the predetermined payment service, the user can exit the recommendation interface or directly close the client device. In this case, the recommendation fails.

In some embodiments of the present specification, to further improve the recommendation strategy and the success rate of service recommendation, after the displaying a recommendation interface to the user based on the recommendation document, the method can further include: obtaining behavioral data of the user based on the recommendation interface, and feed back the behavioral data to the server, so that the server adjusts the predetermined rule based on the behavioral data.

Specifically, the behavioral data of the user based on the recommendation interface can include whether the user clicks the activation button displayed in the recommendation interface, whether the user exits the recommendation interface, whether the user directly exits the client device, duration of stay of the user in the recommendation interface, and other data. A specific strategy for the server to adjust the predetermined rule based on the behavioral data can be set based on actual applications.

In some embodiments of the present specification, a predetermined recommendation fatigue strategy can be followed to control the interruption rate within an appropriate range. Specifically, in an optional embodiment, when it is determined that the user satisfies the activation condition of the predetermined payment service, before the client device sends the recommendation request to the server, the service recommendation method further includes: obtaining a historical recommendation record corresponding to the user, determining whether the historical recommendation record satisfies a predetermined condition, and if yes, performing the step of sending a recommendation request to a server, or if no, stopping the present recommendation.

Specifically, the historical recommendation record can include at least one of a first quantity of times of the recommendation or a second quantity of times of the recommendation. The first quantity of times of the recommendation is the quantity of times of predetermined payment service recommendation for the user in a first target time period. The second quantity of times of the recommendation is the quantity of times of predetermined payment service recommendation for the user in a second target time period. The length of the first target time period is less than the length of the second target time period, and the lengths are specifically set as requested. For example, the first target time period can be seven days before the current time, and the second target time period can be one year before the current time.

When the historical recommendation record includes the first quantity of times of the recommendation and the second quantity of times of the recommendation, the determining whether the historical recommendation record satisfies a predetermined condition can specifically include: determining whether the first quantity of times of the recommendation is less than or equal to a predetermined first time quantity threshold; if yes, determining whether the second quantity of times of the recommendation is less than or equal to a predetermined second time quantity threshold; and if yes, determining that the historical recommendation record satisfies the predetermined condition; or if the first quantity of times of the recommendation is greater than the predetermined first time quantity threshold or the second quantity of times of the recommendation is greater than the predetermined second time quantity threshold, determining that the historical recommendation record does not satisfy the predetermined condition.

The first time quantity threshold and the second time quantity threshold can be set based on actual needs. For example, the first time quantity threshold can be set to zero, and the second time quantity threshold can be set to 5. As such, it can be ensured that recommendation is not repeatedly performed for the user in the first target time period, and recommendation is performed five times or less for the user in the second target time period, so that the interruption rate is controlled within the appropriate range.

In an optional embodiment, when it is determined that the user satisfies the activation condition of the predetermined payment service, before the client device sends the recommendation request to the server, the service recommendation method can further include: detecting whether a historical record indicating that a target function is disabled in a predetermined time period exists on a user terminal, and if no, performing the step of sending a recommendation request to a server, or if yes, stopping the present recommendation.

The predetermined time period can be set based on actual needs. For example, it can be set to 60 days before the current time. The target function corresponds to the predetermined payment service. For example, when the predetermined payment service is the fingerprint-based payment service, the target function is the fingerprint recognition function of the user terminal. For example, in the iOS system, the target function can be TouchID. When the predetermined payment service is the face-based payment service, the target function is the face recognition function of the user terminal. For example, in the iOS system, the target function can be FaceID.

It can be understood that the user's operation of proactively disabling the target function indicates that the user is unwilling to use the target function because of a certain reason. Therefore, recommendation of the predetermined payment service for the user needs to be stopped to avoid affecting the user experience.

According to the service recommendation method provided in some embodiments of the present specification, the recommendation document is selected for the user satisfying the activation condition based on the user's attribute information and the predetermined rule in an appropriate scenario. It improves the success rate of recommendation without significantly improving the interruption rate.

According to a third aspect, embodiments of the present specification provide a service recommendation method. In some embodiments, the service recommendation method is executed by a client device. As shown in FIG. 4, the method includes steps S401 and S402.

Step S401: Determine whether a user satisfies an activation condition of a predetermined payment service when detecting that the user enters a predetermined scenario, where the predetermined scenario is a password-based payment scenario, a password addition scenario, or a password retrieval scenario.

The predetermined scenario can be any scenario in a specified scenario set. In some embodiments of the present specification, the specified scenario set can include the password-based payment scenario, the password addition scenario, and the password retrieval scenario.

Related operations of the user need to be monitored to detect whether the user enters the predetermined scenario. It can be understood that, in the password-based payment scenario, the related operation of the user is a password-based payment operation. To be specific, the user enters a password and completes a payment operation after the password is verified. In the password addition scenario, the related operation of the user is a password addition operation. To be specific, the user adds a password as requested and instructed by the system. In the password retrieval scenario, the related operation of the user is a password retrieval operation. To be specific, the user clicks the "Forget Password" button and retrieves the password as instructed by the system.

Specifically, in an optional embodiment, the step of detecting whether the user enters the password-based payment scenario includes: when detecting that the user triggers a password-based payment operation, determining whether the password-based payment operation is completed, and if yes, determining that the user enters the password-based payment scenario.

It is worthwhile to note that a specific process of the password-based payment operation can include the following: the client device obtains the payment password entered by the user and sends the payment password to the server for verification, and the current payment transaction is completed when the verification succeeds. When the client device receives a verification success instruction from the server, the payment is completed, that is, the password-based payment operation is completed.

In an optional embodiment, the step of detecting whether the user enters the password addition scenario includes: when detecting that the user triggers a password addition operation, determining whether the password addition operation is completed, and if yes, determining that the user enters the password addition scenario.

It is worthwhile to note that the system sends an instruction to a user without a payment password to require the user to add a payment password. The user can trigger the password addition operation to set the payment password as instructed by the system. The password addition operation is completed when the payment password is set successfully.

In an optional embodiment, the step of detecting whether the user enters the password retrieval scenario includes: when detecting that the user triggers a password retrieval operation, determining whether the password retrieval operation is completed, and if yes, determining that the user enters the password retrieval scenario.

It is worthwhile to note that when the user pays with a password, the user needs to enter the payment password. If the user forgot the payment password, the user can retrieve or reset the password by triggering the password retrieval operation. A corresponding operation, such as answering a predetermined question, can be performed as instructed by the system in a specific process. When the password is retrieved successfully, the password retrieval operation is completed.

It can be understood that it is a good time to recommend the service to the user when the user just completed password-based payment. The user needs to remember a password for the password-based payment, and entering the password takes a relatively long time. Recommending a time-efficient and labor-saving option at this moment can better cater to the user's mind. Similarly, in a password addition or retrieval scenario, the user just experienced the trouble of additional operations caused by password forgetting. It is a good time to provide a solution that the user does not need to remember the password. Therefore, it is easier for the user to accept the new payment service recommended in an appropriate scenario, which helps improve the success rate of recommendation.

When the predetermined payment service is a service of payment using biometric information, the activation condition can be set based on actual payment service needs. In an optional embodiment, in step S401, the activation condition includes one or more of the following three conditions: a user terminal used by the user supports a predetermined security protocol; the user's biometric information is pre-entered to the user terminal used by the user; and the predetermined payment service of the user is in an inactive state. Specifically, for the implementation of determining whether the user satisfies the activation condition of the predetermined payment service, reference can be made to the related description in the first aspect. Details are omitted here for simplicity.

Step S402: Display a recommendation interface to the user when the activation condition is satisfied, where the recommendation interface is used to recommend the predetermined payment service to the user.

In some embodiments of the present specification, when the user enters the predetermined scenario and satisfies the activation condition of the predetermined payment service, it indicates that the user is a target user that the predetermined payment service is suitable to be recommended to. Therefore, the predetermined payment service is recommended to the user.

Specifically, there can be a plurality of methods for recommending the predetermined payment service to the target user. In an optional embodiment, the client device can display a predetermined recommendation interface to the user. A predetermined description related to the predetermined payment service and a button for activating the predetermined payment service are displayed in the recommendation interface.

In an optional embodiment, the client device can send a recommendation request to the server. The recommendation request includes the user's identity information such as the user's account information or other identity information. The server obtains the user's attribute information based on the received recommendation request, determines a recommendation document for the present recommendation by matching the attribute information with a predetermined rule that is associated with the recommendation document in advance, and sends the recommendation document to the client device. The client device displays a recommendation interface to the user based on the recommendation document. For a specific process, reference can be made to the related description in the service recommendation method according to the first aspect. Details are omitted here for simplicity.

In some embodiments of the present specification, a predetermined recommendation fatigue strategy can be followed to control the interruption rate within an appropriate range. Specifically, in an optional embodiment, when it is determined that the user satisfies the activation condition of the predetermined payment service, before the displaying a recommendation interface to the user, the service recommendation method further includes: obtaining a historical recommendation record corresponding to the user, determining whether the historical recommendation record satisfies a predetermined condition, and if yes, performing the step of displaying a recommendation interface to the user, or if no, stopping the present recommendation. For a specific process of obtaining the historical recommendation record corresponding to the user and determining whether the historical recommendation record satisfies the predetermined condition, reference can be made to the related description in the service recommendation method according to the second aspect. Details are omitted here for simplicity.

According to the service recommendation method provided in some embodiments of the present specification, the predetermined payment service is recommended to the user satisfying the activation condition in an appropriate scenario. It improves the success rate of recommendation.

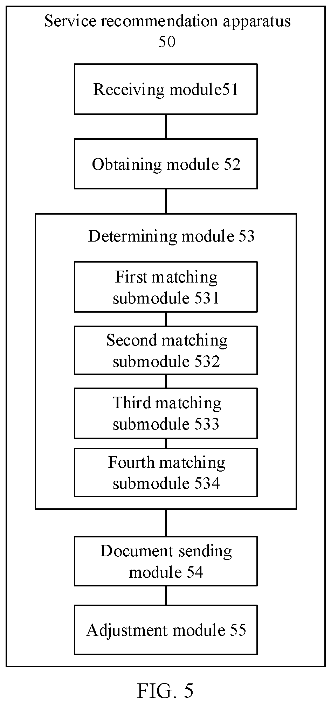

According to a fourth aspect, based on the same inventive concept as the service recommendation method in some embodiments according to the first aspect, embodiments of the present specification further provide a service recommendation apparatus. The apparatus provided in some embodiments can run on a server. As shown in FIG. 5, the service recommendation apparatus 50 can include: a receiving module 51, configured to receive a recommendation request sent by a client device, where the recommendation request is sent when the client device detects that a user enters a predetermined scenario and determines that the user satisfies an activation condition of a predetermined payment service; an acquisition module 52, configured to obtain the user's attribute information based on the recommendation request; a determining module 53, configured to determine a recommendation document for the present recommendation by matching the attribute information with a predetermined rule that is associated with the recommendation document in advance; and a document sending module 54, configured to send the recommendation document to the client device so that the client device displays a recommendation interface to the user based on the recommendation document, where the recommendation interface is used to recommend the predetermined payment service to the user.

In an optional embodiment, the predetermined rule includes a plurality of rules preconfigured with a priority order. Each rule corresponds to a recommendation document. The determining module 53 is specifically configured to sequentially match the attribute information with the plurality of rules based on the priority order; and when the attribute information successfully matches any one of the rules, using a recommendation document corresponding to the successfully matched rule as the recommendation document for the present recommendation.

In an optional embodiment, the attribute information includes information about a scenario that the user is currently in, and the predetermined rule includes a scenario rule. The determining module 53 includes a first matching submodule 531, configured to determine whether the information about the scenario that the user is currently in is related to a specified scenario, and if yes, determine that the attribute information successfully matches the scenario rule, and use a recommendation document that is associated with the scenario rule in advance as the recommendation document for the present recommendation.

In an optional embodiment, the attribute information includes identification information used to indicate whether the user has a historical activation record of the predetermined payment service. The determining module 53 includes a second matching submodule 532, configured to determine whether the user has a historical activation record of the predetermined payment service based on the identification information, and if yes, determine that the attribute information successfully matches the activation record rule, and use a recommendation document that is associated with the activation record rule in advance as the recommendation document for the present recommendation.

In an optional embodiment, the attribute information includes a frequency of payment performed by the user using the client device, and the predetermined rule includes a payment frequency rule. The determining module 53 includes a third matching submodule 533, configured to determine whether the frequency exceeds a predetermined threshold, and if yes, determine that the attribute information successfully matches the payment frequency rule, and use a recommendation document that is associated with the payment frequency rule in advance as the recommendation document for the present recommendation.

In an optional embodiment, the attribute information includes the model of a user terminal used by the user, and the predetermined rule includes a user attribute rule. The determining module 53 includes a fourth matching submodule 534, configured to determine whether the user is a predetermined user based on the model of the user terminal used by the user, and if yes, determine that the attribute information successfully matches the user attribute rule, and use a recommendation document that is associated with the user attribute rule in advance as the recommendation document for the present recommendation.

In an optional embodiment, the apparatus further includes an adjustment module 55, configured to receive behavioral data of the user based on the recommendation interface from the client device, and adjust the predetermined rule based on the behavioral data.

It is worthwhile to note that, according to the service recommendation apparatus 50 provided in some embodiments of the present specification, specific methods used by the units to perform operations are described in detail in the method embodiment according to the first aspect. Details are omitted here for simplicity.

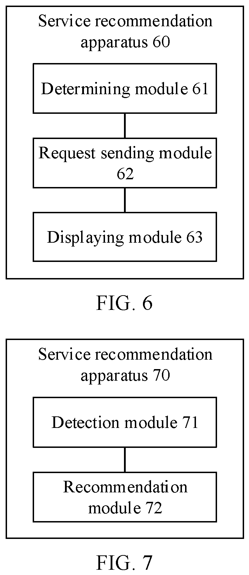

According to a fifth aspect, based on the same inventive concept as the service recommendation method in some embodiments according to the second aspect, embodiments of the present specification further provide a service recommendation apparatus. The apparatus provided in some embodiments can run on a client device. As shown in FIG. 6, the service recommendation apparatus 60 can include: a determining module 61, configured to determine whether a user satisfies an activation condition of a predetermined payment service when detecting that the user enters a predetermined scenario; a request sending module 62, configured to send a recommendation request to a server when the activation condition is satisfied, so that the server obtains the user's attribute information based on the recommendation request, and determines a recommendation document for the present recommendation by matching the attribute information with a predetermined rule that is associated with the recommendation document in advance; and a displaying module 63, configured to receive the recommendation document sent by the server, and display a recommendation interface to the user based on the recommendation document, where the recommendation interface is used to recommend the predetermined payment service to the user.

In an optional embodiment, the predetermined payment service is a service of payment using biometric information. The activation condition includes one or more of the following conditions: a user terminal used by the user supports a predetermined security protocol; the user's biometric information is pre-entered to the user terminal used by the user; and the predetermined payment service of the user is in an inactive state.

In an optional embodiment, the apparatus further includes a feedback module, configured to obtain behavioral data of the user based on the recommendation interface, and feed back the behavioral data to the server so that the server adjusts the predetermined rule based on the behavioral data.

In an optional embodiment, the apparatus further includes a first filtering module, configured to obtain a historical recommendation record corresponding to the user, and determine whether the historical recommendation record satisfies a predetermined condition. If yes, the step of sending a recommendation request to a server is performed. If no, the present recommendation is stopped.

In an optional embodiment, the apparatus further includes a second filtering module, configured to detect whether a historical record indicating that a target function is disabled in a predetermined time period exists on a user terminal. If no, the step of sending a recommendation request to a server is performed. If yes, the present recommendation is stopped.

In an optional embodiment, the predetermined scenario is a password-based payment scenario, a password addition scenario, or a password retrieval scenario.

It is worthwhile to note that, according to the service recommendation apparatus 60 provided in some embodiments of the present specification, specific methods used by the units to perform operations are described in detail in the method embodiment according to the second aspect. Details are omitted here for simplicity.

According to a sixth aspect, based on the same inventive concept as the service recommendation method in some embodiments according to the third aspect, embodiments of the present specification further provide a service recommendation apparatus. The apparatus provided in some embodiments can run on a client device. As shown in FIG. 7, the service recommendation apparatus 70 can include: a detection module 71, configured to determine whether a user satisfies an activation condition of a predetermined payment service when detecting that the user enters a predetermined scenario, where the predetermined scenario is a password-based payment scenario, a password addition scenario, or a password retrieval scenario; and a recommendation module 72, configured to display a recommendation interface to the user when the activation condition is satisfied, where the recommendation interface is used to recommend the predetermined payment service to the user.

In an optional embodiment, when the predetermined scenario is the password-based payment scenario, the detection module 71 is specifically configured to: when detecting that the user triggers a password-based payment operation, determine whether the password-based payment operation is completed, and if yes, determine that the user enters the password-based payment scenario.

In an optional embodiment, when the predetermined scenario is the password addition scenario, the detection module 71 is specifically configured to: when detecting that the user triggers a password addition operation, determine whether the password addition operation is completed, and if yes, determine that the user enters the password addition scenario.

In an optional embodiment, when the predetermined scenario is the password retrieval scenario, the detection module 71 is specifically configured to: when detecting that the user triggers a password retrieval operation, determine whether the password retrieval operation is in completed, and if yes, determine that the user enters the password retrieval scenario.

It is worthwhile to note that, according to the service recommendation apparatus 70 provided in some embodiments of the present specification, specific methods used by the units to perform operations are described in detail in the method embodiment according to the second aspect. Details are omitted here for simplicity.

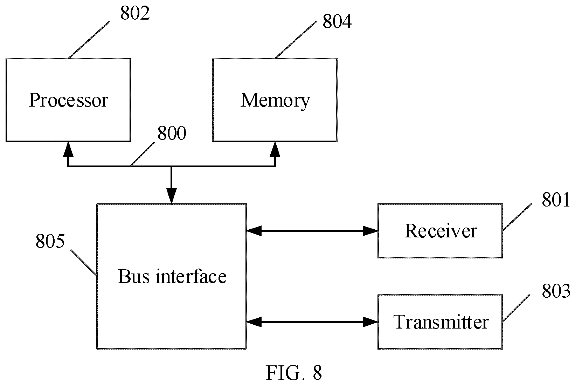

According to a seventh aspect, based on the same inventive concept, the present specification further provides an electronic device. As shown in FIG. 8, the electronic device includes a memory 804, one or more processors 802, and a computer program that is stored on the memory 804 and can run on the processor 802. When the electronic device functions as a server, the processor 802 implements the steps in the service recommendation method in some embodiments according to the first aspect when executing the program. When the electronic device functions as a user terminal, the processor 802 implements the steps in the service recommendation method in some embodiments according to the second aspect or the third aspect when executing the program.

In FIG. 8, a bus architecture is represented by a bus 800. The bus 800 can include any quantity of interconnected buses and bridges. The bus 800 links various circuits including the one or more processors represented by the processor 802 and memories represented by the memory 804. The bus 800 can further link various other circuits such as a peripheral device, a voltage regulator, and a power management circuit, which are well known in the art and therefore are not further described in the present specification. A bus interface 805 provides an interface between the bus 800 and a receiver 801 and a transmitter 803. The receiver 801 and the transmitter 803 can be the same element, that is, a transceiver, providing a unit for communicating with various other apparatuses on a transmission medium. The processor 802 is responsible for managing the bus 800 and general processing. The memory 804 can be configured to store data used when the processor 802 performs operations.

It can be understood that the structure shown in FIG. 8 is merely an illustration, and the electronic device can further include more or fewer components than those shown in FIG. 8 or have a configuration different from that shown in FIG. 8. Each component shown in FIG. 8 can be implemented by hardware, software, or a combination of hardware and software.

In an eighth aspect, based on the same inventive concept as the service recommendation method in some embodiments according to the first aspect, the present specification further provides a computer-readable storage medium storing a computer program. When the program is executed by a processor, the steps in the service recommendation method in some embodiments according to the first aspect are implemented.

In a ninth aspect, based on the same inventive concept as the service recommendation method in some embodiments according to the second aspect, the present specification further provides a computer-readable storage medium storing a computer program. When the program is executed by a processor, the steps in the service recommendation method in some embodiments according to the second aspect are implemented.

In a tenth aspect, based on the same inventive concept as the service recommendation method in some embodiments according to the second aspect, the present specification further provides a computer-readable storage medium storing a computer program. When the program is executed by a processor, the steps in the service recommendation method in some embodiments according to the third aspect are implemented.

The present specification is described with reference to the flowcharts and/or block diagrams of the method, the device, and the computer program product based on some embodiments of the present specification. It should be understood that computer program instructions can be used to implement each process and/or each block in the flowcharts and/or the block diagrams and a combination of a process and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate a device for implementing a specific function in one or more processes in the flowcharts and/or in one or more blocks in the block diagrams.

These computer program instructions can be stored in a computer-readable memory that can instruct the computer or the another programmable data processing device to work in a specific way, so the instructions stored in the computer-readable memory generate an artifact that includes an instruction apparatus. The instruction apparatus implements a specific function in one or more processes in the flowcharts and/or in one or more blocks in the block diagrams.

These computer program instructions can be loaded onto the computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present specification have been described, persons skilled in the art can make changes and modifications to these embodiments once they understand the basic inventive concept. Therefore, the following claims are intended to be construed as to cover the preferred embodiments and all changes and modifications falling within the scope of the present specification.

It is to be understood that, persons skilled in the art can make various modifications and variations to the present specification without departing from the spirit and scope of the present specification. The present specification is intended to cover these modifications and variations provided that they fall within the scope of protection defined by the following claims and their equivalent technologies.

## Claims

1. A service recommendation method, comprising:
receiving a recommendation request sent by a client device, wherein the recommendation request is sent when the client device detects that a user enters a predetermined scenario and determines that the user satisfies an activation condition of a predetermined payment service;
obtaining the user's attribute information based on the recommendation request;
determining a recommendation document for the present recommendation by matching the attribute information with a predetermined rule that is associated with the recommendation document in advance; and
sending the recommendation document to the client device so that the client device displays a recommendation interface to the user based on the recommendation document, wherein the recommendation interface is used to recommend the predetermined payment service to the user.

2. The method according to claim 1, wherein the predetermined rule comprises a plurality of rules preconfigured with a priority order, each rule corresponds to a recommendation document, and the determining a recommendation document for the present recommendation by matching the attribute information with a predetermined rule that is associated with the recommendation document in advance comprises:
sequentially matching the attribute information with the plurality of rules based on the priority order; and
when the attribute information successfully matches any one of the rules, using a recommendation document corresponding to the successfully matched rule as the recommendation document for the present recommendation.

3. The method according to claim 1, wherein the attribute information comprises information about a scenario that the user is currently in, the predetermined rule comprises a scenario rule, and the determining a recommendation document for the present recommendation by matching the attribute information with a predetermined rule that is associated with the recommendation document in advance comprises:
determining whether the information about the scenario that the user is currently in is related to a specified scenario, and if yes, determining that the attribute information successfully matches the scenario rule, and using a recommendation document that is associated with the scenario rule in advance as the recommendation document for the present recommendation.

4. The method according to claim 1, wherein the attribute information comprises identification information used to indicate whether the user has a historical activation record of the predetermined payment service, the predetermined rule comprises an activation record rule, and the determining a recommendation document for the present recommendation by matching the attribute information with a predetermined rule that is associated with the recommendation document in advance comprises:
determining whether the user has a historical activation record of the predetermined payment service based on the identification information, and if yes, determining that the attribute information successfully matches the activation record rule, and using a recommendation document that is associated with the activation record rule in advance as the recommendation document for the present recommendation.

5. The method according to claim 1, wherein the attribute information comprises a frequency of payment performed by the user using the client device, the predetermined rule comprises a payment frequency rule, and the determining a recommendation document for the present recommendation by matching the attribute information with a predetermined rule that is associated with the recommendation document in advance comprises:
determining whether the frequency exceeds a predetermined threshold, and if yes, determining that the attribute information successfully matches the payment frequency rule, and using a recommendation document that is associated with the payment frequency rule in advance as the recommendation document for the present recommendation.

6. The method according to claim 1, wherein the attribute information comprises the model of a user terminal used by the user, the predetermined rule comprises a user attribute rule, and the determining a recommendation document for the present recommendation by matching the attribute information with a predetermined rule that is associated with the recommendation document in advance comprises:
determining whether the user is a predetermined user based on the model of the user terminal used by the user, and if yes, determining that the attribute information successfully matches the user attribute rule, and using a recommendation document that is associated with the user attribute rule in advance as the recommendation document for the present recommendation.

7. The method according to claim 1, further comprising:
receiving behavioral data of the user based on the recommendation interface from the client device; and
adjusting the predetermined rule based on the behavioral data.

8. A service recommendation method, comprising:
determining whether a user satisfies an activation condition of a predetermined payment service when detecting that the user enters a predetermined scenario;
sending a recommendation request to a server when the activation condition is satisfied, so that the server obtains the user's attribute information based on the recommendation request, and determines a recommendation document for the present recommendation by matching the attribute information with a predetermined rule that is associated with the recommendation document in advance; and
receiving the recommendation document sent by the server, and displaying a recommendation interface to the user based on the recommendation document, wherein the recommendation interface is used to recommend the predetermined payment service to the user.

9. The method according to claim 8, wherein the predetermined payment service is a service of payment using biometric information, and the activation condition comprises one or more of the following conditions:
a user terminal used by the user supports a predetermined security protocol;
the user's biometric information is pre-entered to the user terminal used by the user; and
the predetermined payment service of the user is in an inactive state.

10. The method according to claim 8, after the displaying a recommendation interface to the user based on the recommendation document, further comprising:
obtaining behavioral data of the user based on the recommendation interface, and feeding back the behavioral data to the server so that the server adjusts the predetermined rule based on the behavioral data.

11. The method according to claim 8, before the sending a recommendation request to a server, further comprising:
obtaining a historical recommendation record corresponding to the user, determining whether the historical recommendation record satisfies a predetermined condition, and if yes, performing the step of sending a recommendation request to a server, or if no, stopping the present recommendation.

12. The method according to claim 8, before the sending a recommendation request to a server, further comprising:
detecting whether a historical record indicating that a target function is disabled in a predetermined time period exists on a user terminal, and if no, performing the step of sending a recommendation request to a server, or if yes, stopping the present recommendation.

13. The method according to claim 8, wherein the predetermined scenario is a password-based payment scenario, a password addition scenario, or a password retrieval scenario.

14. A service recommendation method, comprising:
determining whether a user satisfies an activation condition of a predetermined payment service when detecting that the user enters a predetermined scenario, wherein the predetermined scenario is a password-based payment scenario, a password addition scenario, or a password retrieval scenario; and
displaying a recommendation interface to the user when the activation condition is satisfied, wherein the recommendation interface is used to recommend the predetermined payment service to the user.

15. The method according to claim 14, wherein when the predetermined scenario is a password-based payment scenario, a step of detecting the predetermined scenario comprises:
when detecting that the user triggers a password-based payment operation, determining whether the password-based payment operation is completed, and if yes, determining that the user enters the password-based payment scenario.

16. The method according to claim 14, wherein when the predetermined scenario is a password addition scenario, a step of detecting the predetermined scenario comprises:
when detecting that the user triggers a password addition operation, determining whether the password addition operation is completed, and if yes, determining that the user enters the password addition scenario.

17. The method according to claim 14, wherein when the predetermined scenario is a password retrieval scenario, a step of detecting the predetermined scenario comprises:
when detecting that the user triggers a password retrieval operation, determining whether the password retrieval operation is completed, and if yes, determining that the user enters the password retrieval scenario.

18. A service recommendation apparatus, comprising:
a receiving module, configured to receive a recommendation request sent by a client device, wherein the recommendation request is sent when the client device detects that a user enters a predetermined scenario and determines that the user satisfies an activation condition of a predetermined payment service;
an acquisition module, configured to obtain the user's attribute information based on the recommendation request;
a determining module, configured to determine a recommendation document for the present recommendation by matching the attribute information with a predetermined rule that is associated with the recommendation document in advance; and
a document sending module, configured to send the recommendation document to the client device so that the client device displays a recommendation interface to the user based on the recommendation document, wherein the recommendation interface is used to recommend the predetermined payment service to the user.

19. The apparatus according to claim 18, wherein the predetermined rule comprises a plurality of rules preconfigured with a priority order, each rule corresponds to a recommendation document, and the determining module is specifically configured to:
sequentially matching the attribute information with the plurality of rules based on the priority order; and
when the attribute information successfully matches any one of the rules, use a recommendation document corresponding to the successfully matched rule as the recommendation document for the present recommendation.

20. The apparatus according to claim 18, wherein the attribute information comprises information about a scenario that the user is currently in, the predetermined rule comprises a scenario rule, and the determining module comprises:
a first matching submodule, configured to determine whether the information about the scenario that the user is currently in is related to a specified scenario, and if yes, determine that the attribute information successfully matches the scenario rule, and use a recommendation document that is associated with the scenario rule in advance as the recommendation document for the present recommendation.

21. The apparatus according to claim 18, wherein the attribute information comprises identification information used to indicate whether the user has a historical activation record of the predetermined payment service, and the determining module comprises:
a second matching submodule, configured to determine whether the user has a historical activation record of the predetermined payment service based on the identification information, and if yes, determine that the attribute information successfully matches the activation record rule, and use a recommendation document that is associated with the activation record rule in advance as the recommendation document for the present recommendation.

22. The apparatus according to claim 18, wherein the attribute information comprises a frequency of payment performed by the user using the client device, the predetermined rule comprises a payment frequency rule, and the determining module comprises:
a third matching submodule, configured to determine whether the frequency exceeds a predetermined threshold, and if yes, determine that the attribute information successfully matches the payment frequency rule, and use a recommendation document that is associated with the payment frequency rule in advance as the recommendation document for the present recommendation.

23. The apparatus according to claim 18, wherein the attribute information comprises the model of a user terminal used by the user, the predetermined rule comprises a user attribute rule, and the determining module comprises:
a fourth matching submodule, configured to determine whether the user is a predetermined user based on the model of the user terminal used by the user, and if yes, determine that the attribute information successfully matches the user attribute rule, and use a recommendation document that is associated with the user attribute rule in advance as the recommendation document for the present recommendation.

24. The apparatus according to claim 18, further comprising:
an adjustment module, configured to receive behavioral data of the user based on the recommendation interface from the client device, and adjust the predetermined rule based on the behavioral data.

25. A service recommendation apparatus, comprising:
a determining module, configured to determine whether a user satisfies an activation condition of a predetermined payment service when detecting that the user enters a predetermined scenario;
a request sending module, configured to send a recommendation request to a server when the activation condition is satisfied, so that the server obtains the user's attribute information based on the recommendation request, and determines a recommendation document for the present recommendation by matching the attribute information with a predetermined rule that is associated with the recommendation document in advance; and
a displaying module, configured to receive the recommendation document sent by the server, and display a recommendation interface to the user based on the recommendation document, wherein the recommendation interface is used to recommend the predetermined payment service to the user.

26. The apparatus according to claim 25, wherein the predetermined payment service is a service of payment using biometric information, and the activation condition comprises one or more of the following conditions:
a user terminal used by the user supports a predetermined security protocol;
the user's biometric information is pre-entered to the user terminal used by the user; and
the predetermined payment service of the user is in an inactive state.

27. The apparatus according to claim 25, further comprising:
a feedback module, configured to obtain behavioral data of the user based on the recommendation interface, and feed back the behavioral data to the server so that the server adjusts the predetermined rule based on the behavioral data.

28. The apparatus according to claim 25, further comprising:
a first filtering module, configured to obtain a historical recommendation record corresponding to the user, and determine whether the historical recommendation record satisfies a predetermined condition, wherein if yes, the step of sending a recommendation request to a server is performed, or if no, the present recommendation is stopped.

29. The apparatus according to claim 25, further comprising:
a second filtering module, configured to detect whether a historical record indicating that a target function is disabled in a predetermined time period exists on a user terminal, wherein if no, the step of sending a recommendation request to a server is performed, or if yes, the present recommendation is stopped.

30. The apparatus according to claim 25, wherein the predetermined scenario is a password-based payment scenario, a password addition scenario, or a password retrieval scenario.

31. A service recommendation apparatus, comprising:
a detection module, configured to determine whether a user satisfies an activation condition of a predetermined payment service when detecting that the user enters a predetermined scenario, wherein the predetermined scenario is a password-based payment scenario, a password addition scenario, or a password retrieval scenario; and
a recommendation module, configured to display a recommendation interface to the user when the activation condition is satisfied, wherein the recommendation interface is used to recommend the predetermined payment service to the user.

32. The apparatus according to claim 31, wherein when the predetermined scenario is the password-based payment scenario, the detection module is specifically configured to:
when detecting that the user triggers a password-based payment operation, determining whether the password-based payment operation is completed, and if yes, determining that the user enters the password-based payment scenario.

33. The apparatus according to claim 31, wherein when the predetermined scenario is the password addition scenario, the detection module is specifically configured to:
when detecting that the user triggers a password addition operation, determining whether the password addition operation is completed, and if yes, determining that the user enters the password addition scenario.

34. The apparatus according to claim 31, wherein when the predetermined scenario is the password retrieval scenario, the detection module is specifically configured to:
when detecting that the user triggers a password retrieval operation, determining whether the password retrieval operation is completed, and if yes, determining that the user enters the password retrieval scenario.

35. An electronic device, comprising a memory, a processor, and a computer program that is stored on the memory and can run on the processor, wherein when the processor executes the program, the steps in the method according to any one of claims 1 to 17 are implemented.

36. A computer-readable storage medium, storing a computer program, wherein when the program is executed by a processor, the steps in the method according to any one of claims 1 to 17 are implemented.
